# EUROPÄISCHE PATENTSCHRIFT

(11) **EP 2 349 704 B1**
(45) Veröffentlichungstag und Bekanntmachung des Hinweises auf die Patenterteilung: **02.03.2022**
(21) Anmeldenummer: 09759864.3
(22) Anmeldetag: 12.10.2009
(51) Int. Cl.: B30B 1/18

(54) **ANTRIEBSVORRICHTUNG FÜR DEN DRUCKBALKEN EINER BIEGEPRESSE**
DRIVE DEVICE FOR THE PRESSURE BEAM OF A BENDING PRESS
DISPOSITIF D'ENTRAÎNEMENT POUR LA BARRE DE PRESSION D'UNE PRESSE À CINTRER

(30) Priorität: 16.10.2008 AT 16302008
(43) Veröffentlichungstag der Anmeldung: 03.08.2011
(73) Patentinhaber: TRUMPF Maschinen Austria GmbH & Co. KG., 4061 Pasching (AT)
(72) Erfinder: GAGGL, Josef, 4400 Steyr (AT)
(74) Vertreter: Burger, Hannes
(86) Internationale Anmeldenummer: PCT/AT2009/000398
(87) Internationale Veröffentlichungsnummer: WO 2010/042963

(56) Entgegenhaltungen:
- DE-A1- 2 207 454
- DE-B1- 2 207 433
- JP-A- 11 151 631
- JP-A- S61 255 793
- JP-A- S61 255 794
- JP-A- 2000 170 865

## Beschreibung

Die Erfindung betrifft eine Antriebsvorrichtung wie sie im Oberbegriff des Anspruchs 1 beschrieben ist.

Aus dem Dokument EP 1 600 225 A1 ist eine Stanzmaschine mit elektrischem Dreh-Hubantrieb bekannt, mittels dessen eine Werkzeuglagerung für ein Stanzwerkzeug in Richtung einer Hubachse hin- und rückbewegbar und um die Hubachse dreheinstellbar ist. Eine Werkzeuglagerung ist mit einer Antriebsspindel des Dreh-/Hubantriebes bewegungsverbunden. Eine auf der Antriebsspindel aufsitzende Hubspindelmutter ist an einem umlaufenden Rotor eines Hubantriebmotors angebracht und ebenso wie dieser innerhalb eines Stators des Hubantriebsmotors angeordnet. Dabei überdecken sich die Hubspindelmutter und der Stator des Hubantriebmotors in axialer Richtung mit der Antriebsspindel wenigstens teilweise.

Die JP-A-11151631 A1 offenbart eine Antriebsvorrichtung für einen Pressbalken mit einer Gewindespindel und einer angetriebenen Gewindemutter. Die Gewindemutter ist mit dem Rotor eines Elektro-Hohlwellenmotors verbunden. Die Lagerung des Rotors und der Gewindemutter erfolgt in beiderseits des Rotors des Elektromotors. Der Rotor des Drehantriebs wird durch einen magnetbestückten Rotorkranz gebildet. Die JP-A-11151631 offenbart auch eine Biegepresse gemäß dem Oberbegriff des Anspruchs 1.

Aufgabe der Erfindung ist es, eine Antriebsvorrichtung für eine reversible, lineare Bewegung eines Druckbalkens einer Biegepresse zu schaffen die eine einfache Bauweise aufweist und mit der eine kurze Hubfolge erreicht wird.

Diese Aufgabe der Erfindung wird durch die im Kennzeichenteil des Anspruches 1 wiedergegebenen Merkmale erreicht. Der überraschende Vorteil dabei ist, dass eine derartige kombinierte Ausbildung des Rotors und Spindelmutter die Anzahl der Bauteile und Passverbindungen reduziert und damit eine exakte Lagerung und minimierter Montageaufwand erreicht wird. Die Ausbildung mit der beschriebenen Abkapselung des Lagerinnenraumes ermöglicht eine Lagerschmierung auf Lebenszeit wodurch Wartungsarbeiten vermindert werden. Möglich ist dabei auch eine Ausbildung nach Anspruch 2 die eine gemeinsame Lageranordnung für die Spindelmutter und dem Rotor vorsieht und damit Einsparung von Bauelementen hohe Beschleunigungswerte in den Bewegungsabläufen erreicht werden und der Energieeinsatz minimiert wird.

Vorteilhaft ist aber auch eine Ausbildung nach Anspruch 3, wodurch eine exakte Auflagerung der Antriebsvorrichtung auf einen Querverband des Maschinengestells erreicht wird.

Von Vorteil ist weiters eine Ausbildung wie sie im Anspruch 4 beschrieben ist, weil damit eine exakte koaxiale Ausrichtung des Stators bezüglich der Lageranordnung für den Rotor im Gehäuse erreicht wird.

Gemäß den vorteilhaften Ausbildungen wie sie in den Ansprüchen 5 und 6 beschrieben sind, ist die Bauhöhe der Antriebsvorrichtung unabhängig von einer Hubhöhe des Druckbalkens minimierbar.

Durch die im Anspruch 7 beschriebene, vorteilhafte Weiterbildung, können hohe Beschleunigungs- und Verzögerungskräfte wie aber auch hohe Druckkräfte für den Umformvorgang aufgenommen werden.

Vorteilhaft ist dabei eine Ausbildung nach Anspruch 8, wodurch ein erschütterungsfreier Betrieb erreicht wird.

Gemäß der in Anspruch 9 beschriebenen vorteilhaften Weiterbildung wird der Wartungsaufwand durch die Möglichkeit einer Dauerschmierung der Lageranordnung für die Rotationselemente erreicht.

Die im Anspruch 10 beschriebene, vorteilhafte Ausbildung ermöglicht eine kurze Bauform der Spindelmuttern und damit eine reduzierte Bauhöhe der Antriebsvorrichtung.

Gemäß den in den Ansprüchen 11 und 12 beschriebenen, vorteilhaften Weiterbildungen wird bei der Anwendung von zwei Antriebsvorrichtung an einer Biegepresse ein gegenläufiger Drehsinn und damit einander entgegenwirkende Drehmomente möglich wodurch auch bei hohen Geschwindigkeiten, zur Erzielung kurzer Zykluszeiten, eine hohe Laufruhe erreicht wird.

Die in den Ansprüchen 13 und 14 beschriebenen, vorteilhaften Weiterbildungen gewährleisten eine exakte Zentrierung der Lageranordnung im Gehäuse und des Rotors im Bezug auf den Stator, wodurch das Spiel zwischen dem Rotor und dem Stator zur Erzielung eines hohen Wirkungsgrades der Antriebsvorrichtung gering gehalten werden kann.

Von Vorteil ist auch eine Ausbildung nach Anspruch 15, weil eine exakte konzentrische Lagerung des Rotorkranzes bezüglich der Innenumfangsfläche des Stators erreicht wird. Vorteilhafte Ausbildungen beschreiben auch die Ansprüche 16 bis 19, weil dadurch die Außenabmessung des Antriebsmittels weiter reduziert wird.

Es ist aber auch eine Ausbildung nach Anspruch 20 vorteilhaft wodurch die räumliche Ausgestaltung des Gehäuses und die Montage vereinfacht werden.

Schließlich ist auch eine Ausbildung wie sie im Anspruch 21 beschrieben ist, vorteilhaft, wodurch eine hohe Antriebsleistung durch das erzielbare hohe Drehmoment bei geringem Gewicht und geringen Baumaßen der Antriebsmittel erreicht wird.

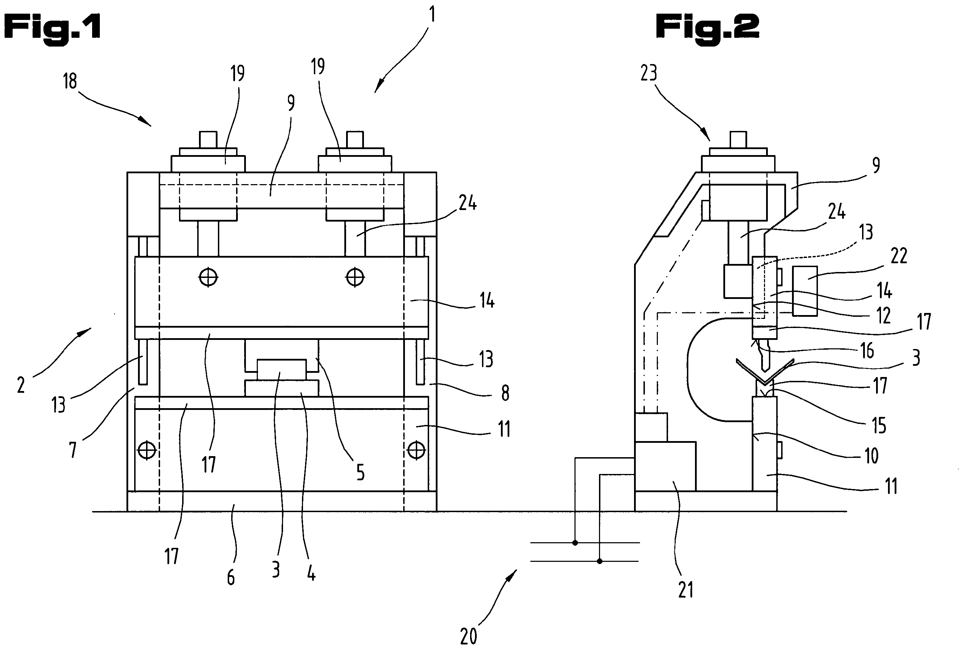

Die Erfindung wird durch die in den Figuren gezeigten Ausführungsbeispiele näher erläutert. Es zeigen jeweils in stark schematisch vereinfachter Darstellung:
erfindungsgemäße Fig. 1 eine Biegepresse in Ansicht;
Fig. 2 die Biegepresse in Seitenansicht;
Fig. 3 ein Antriebsmittel der erfindungsgemäßen Biegepresse geschnitten;
Fig. 4 eine andere Ausbildung der Antriebsvorrichtung der erfindungsgemäßen Biegepresse , geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

In den Fig. 1 und 2 ist eine Biegepresse 1, insbesondere Abkantpresse 2 zur Herstellung von Werkteilen 3 zwischen relativ zueinander verstellbaren Biegewerkzeugen 4, 5 gezeigt.

Ein Maschinengestell der Biegepresse 1 besteht beispielsweise aus einer Bodenplatte 6 auf der vertikal aufragend, zueinander beabstandet und parallel zueinander ausgerichtete Seitenwangen 7, 8 angeordnet sind. Diese sind bevorzugt durch einen massiven, beispielsweise aus einem Blechformteil gebildeten Querverband 9 an ihren von der Bodenplatte distanzierten Endbereichen verbunden.

Die Seitenwangen 7, 8 sind zur Bildung eines Freiraumes für das Umformen des Werkteils 3 etwa C - förmig, wobei an Frontstirnflächen 10 von bodennahen Schenkeln der Seitenwangen 7, 8 ein feststehender, auf der Bodenplatte 7 aufstehender Tischbalken 11 befestigt ist. An Frontstimflächen 12 von Bodenentfernten Schenkeln ist in Linearführungen 13 ein zum Tischbalken 11 relativ verstellbarer Druckbalken 14 gelagert. Auf einander gegenüberliegenden, parallel zueinander verlaufenden Stirnflächen 15, 16 des Tischbalkens 11 und Druckbalkens 14 sind Werkzeugaufnahmen 17 zur Bestückung mit dem Biegewerkzeugen 4, 5 angeordnet.

Die gezeigte Biegepresse 1 weist als Antriebsanordnung 18 für den verstellbaren Druckbalken 14 zwei mit elektrischer Energie betriebene Antriebsmittel 19 auf, die mit einer aus einem Energienetz 20 angespeisten Steuereinrichtung 21 leitungsverbunden sind. Über ein mit der Steuereinrichtung 21 leitungsverbundenes Eingabeterminal 22 wird beispielsweise der Betrieb der Biegepresse 1 gesteuert.

Bei den Antriebsmitteln 19 handelt es sich um elektromotorische Spindeltriebe 23, wie sie im Detail noch später beschrieben werden, von denen Stellmitteln 24 für eine reversible Stellbewegung des Druckbalkens 7 mit diesem, zum Beispiel antriebsverbunden sind.

Auf weitere für den Betrieb einer derartigen Biegepresse 1 erforderliche Details, wie beispielsweise Sicherheitseinrichtungen, Anschlagsanordnungen, Kontroll- und Messeinrichtungen wird in der gegenständlichen Beschreibung zur Vermeidung einer unnötigen Länge der Beschreibung verzichtet,

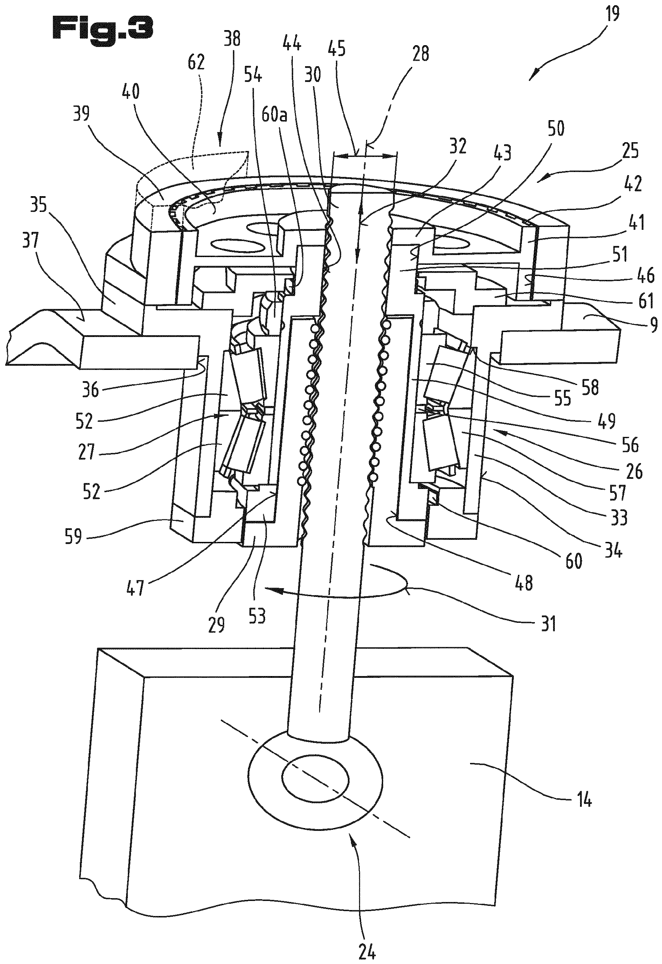

In der Fig. 3 ist das Antriebsmittel 19 nunmehr im Detail gezeigt und nachfolgend beschrieben. Das durch den Spindeltrieb 23 gebildete Antriebsmittel 19 weist einen elektromotorischen Drehantrieb 25 für eine, in einem Gehäuse 26 in einer Lageranordnung 27, um eine Längsmittelachse 28 drehbar gelagerte Spindelmutter 29 auf.

In Eingriffsverbindung mit der Spindelmutter 29 ist eine das Stellmittel 24 ausbildende Gewindespindel 30.

Die Gewindespindel 30 ist wie bereits in den vorhergehenden Figuren beispielsweise mittels eines Bolzens mit dem Druckbalken 14 drehfest verbunden, wodurch bei einer Drehbewegung der Spindelmutter 29 mittels des Drehantriebes 25, entsprechend der jeweiligen Drehrichtung
- gemäß Doppelpfeil 31, eine reversible, lineare Auf- oder Abwärtsbewegung der Gewindespindel 30 und damit des Druckbalkens 14 - gemäß Doppelpfeil 32 - erfolgt.

Das Gehäuse 26 wird durch einen Rohrfortsatz 33 gebildet, der zur Montage auf den Querverband 9 einen, einen zylindrischen Außenumfang 34 des Rohrfortsatzes 33 ringförmig überragenden, Flansch 35 aufweist. Bevorzugt weist der Querverband 9 eine dem Außenumfang 34 des Rohrfortsatzes 33 entsprechende Bohrung 36 auf, womit vorgesehen ist, den Flansch 35 auf einer Oberseite 37 des Querverbandes 9 aufliegend zu befestigen und der Rohrfortsatz 33 den Querverband 9 durchragt.

Auf dem Flansch 35 und bevorzugt gemeinsam mit diesen mit dem Querverband 9 über nicht weiter dargestellte Befestigungsmittel verbunden, ist der Drehantrieb 25 angeordnet. Dieser wird durch einen elektrischen Vielpol- Servomotor gebildet. Bekannt sind derartige Motore unter der Bezeichnung "Torque - Motor", die sich durch ein hohes Drehmoment auszeichnen. Ein ringförmiges Außengehäuse 38 bildet einen Stator 39 aus innerhalb diesem ein Rotor 40 rotierend angeordnet ist.

Der Rotor 40 weist im Wesentlichen eine Scheibenform auf, mit einem dem Stator 39 zugewanden Rotorkranz 41der mit parallel zur Längsmittelachse 28 ausgerichtete Stabmagnete 42 bestückt ist.

Eine Nabe 43 des Rotors 40 weist eine konzentrisch zur Längsmittelachse 28 angeordnete Bohrung auf die größer ist als ein Außendurchmesser 45 der Gewindespindel 30, wodurch der Rotor 40 von der Gewindespindel 30 bei der auf- und abwärtsgerichteten Bewegung durchragt wird.

Der Stator 39 weist die mit der elektrischen Energie aus dem Energienetz zur Erzeugung eines elektrischen Drehfeldes beaufschlagbaren - nicht weiter im Detail gezeigten - Wicklungen auf.

Wesentlich ist eine exakt zentrische Anordnung des Rotors 40 innerhalb des Stators 39, da der Rotor 40 für eine hohe Energieumsetzung ein geringstmögliches Spiel gegenüber einem Innenumfang 46 des Stators 39 aufweisen soll. Dies erfordert zur Erzielung einer einfachen Bauweise des Antriebsmittels 19 ein Höchstmaß an Präzision für die zentrische Lagerung der durch den Stator 43 anzutreibenden Gewindespindel 29 zur Übertragung des Drehmoments des Drehantriebes 25.

Dies ist bei dem Antriebsmittel 25 durch einen mittels der Lageranordnung 27 im Rohrfortsatz 33 des Gehäuses 26 drehbar gelagerten, die Spindelmutter 29 an einem zylindrischen Außenumfang 47 in einer Bohrung 48 aufnehmenden, hülsenförmigen Lagerungskörper 49 gelöst, der in einer Aufnahmebohrung 50 der Nabe 43. mit einem Zentrierfortsatz 51 einragend, drehfest angeordnet ist.

Damit bilden der Rotor 40 mit dem Lagerungskörper 49 und der Spindelmutter 29 eine kompakte Antriebseinheit, die über die Lageranordnung 27 im Rohrfortsatz 33 gelagert ist und wodurch die hohe Präzision der Positionierung des Rotors 40 im Stator 39 gewährleistet wird.

Entscheidend für die Erreichung der hohen Präzision ist die Ausbildung der Lageranordnung 27, die sowohl für die Radiallagerung des Lagerungskörpers 49 wie auch eine entsprechende Axialabstützung des Lagerungskörpers 49 gegen über den durch die entstehenden Massenkräfte bei der Verstellung des Druckbalken 14 mit der Gewindespindel 30 - gemäß Doppelpfeil 32 - wie auch bei der Aufbringung der Druckkräfte bei Umformung des Werkteils auftretenden Kräfte von der Lagerungsanordnung 27 auf das Gehäuse 26 zu übertragen sind.

Dies wird im gezeigten Ausführungsbeispiel durch ein Paar gegengleich angeordneter und den Lagerungskörper 49 im Rohrfortsatz 33 lagernder und bevorzugt spieleinstellbarer Radiallager 52, z.B. Kegelrollenlager erreicht, wobei aber auch Schrägkugel- oder Pendelrollenlager möglich sind.

Die Radiallager 52 sind zur Aufnahme der Radial - und Axialkräfte am Außenumfang des Lagerungskörpers 49 zwischen einem Spannflansch 53 des Lagerungskörpers 49 und einer Wellenmutter 54 an Innenringen 55, gegebenenfalls unter Zwischenschaltung eines Distanzringes 56, in axialer Richtung gespannt. Außenringe 57 der Radiallager 52 sind im Rohrfortsatz 33 des Gehäuses 26 zwischen einem ringförmigen Spannansatz 58 und einem dem Rohrfortsatz 33 begrenzenden Abschlussring 59 gespannt. Dieser weist an seinem Innenumfang zur Abdichtung eines Lagerinnenraumes ein in einer Nut angeordnetes ringförmiges Dichtelement 60 auf, das mit dem Spannflansch 53 des Lagerungskörpers 49 zusammenwirkt und beispielsweise durch einen Wellendichtring gebildet ist.

Ein weiterer dichtender Abschluss des Lagerinnenraumes gegenüber dem Drehantrieb 25 wird durch einen Deckelring 61 mit einem weiteren Dichtelement 60a im Bereich des Zentrierfortsatzes 51 des Lagerungskörpers 49 erreicht. Der Deckelring 61 ist innerhalb des Rotorkranzes 41 des Rotors 40 angeordnet und auf dem Flansch 35 des Gehäuses 26 befestigt.

Die Ausbildung mit der beschriebenen Abkapselung des Lagerinnenraumes ermöglicht eine Lagerschmierung auf Lebenszeit wodurch Wartungsarbeiten vermindert werden.

Für die Bewegungs- und Kraftübertragung zwischen der Spindelmutter 29 und der Gewindespindel 30 eignet sich in bevorzugter Weise als Spindelmutter 29 eine Kugelumlauf - Spindelmutter bei der der Kugelumlauf in dem Hülsenkörper der Spindelmutter 29 erfolgt und einer entsprechenden Ausbildung der Kugelwendel in der Gewindespindel 30. Eine derartige Ausbildung gewährleistet auch bei hohen Antriebleistungen und Geschwindigkeiten eine hohe Standzeit bei geringem Wartungsaufwand.

Es soll noch darauf hingewiesen werden, dass im gezeigten Ausführungsbeispiel eine den Drehantrieb 25 an seiner Oberseite verschließende Deckscheibe 62, die mit einer Durchgangsbohrung für die Gewindespindel 30 versehen ist, in unterbrochenen Linien andeutungsweise gezeigt ist.

In dem in den Fig. 1 und 2 gezeigten Ausführungsbeispiel weist die Abkantpresse 2 zwei der Antriebsmittel 19 zur Verstellung des Druckbalkens 14 auf. Bei einer derartigen Antriebsvorrichtung 18 wird bevorzugt ein Antriebsmittel 19 mit einer rechtsgängigen Gewindespindel 30 und das weitere Antriebsmittel 19 mit einer linksgängigen Gewindespindel 30 vorgesehen. Damit werden insbesondere bei den geforderten hohen Stellgeschwindigkeiten, die durch Beschleunigungs- und Bremsmomente der Antriebsanordnungen auftretenden Schwingungen im Maschinengestell und damit der Biegepresse, durch die entgegen gesetzten Bewegungsabläufe an den Antriebsmitteln 19, wirkungsvoll vermieden und ein ergonomischer Betrieb durch einen vibrationsfreien Betrieb und einer geringeren Lärmentwicklung erreicht.

Es wird noch darauf hingewiesen, dass selbstverständlich die erfindungsgemäße Antriebsvorrichtung 18 auch bei Biegepressen 1, die nur ein Antriebsmittel 19 oder mehr als zwei der Antriebsmittel 19 aufweisen, möglich sind.

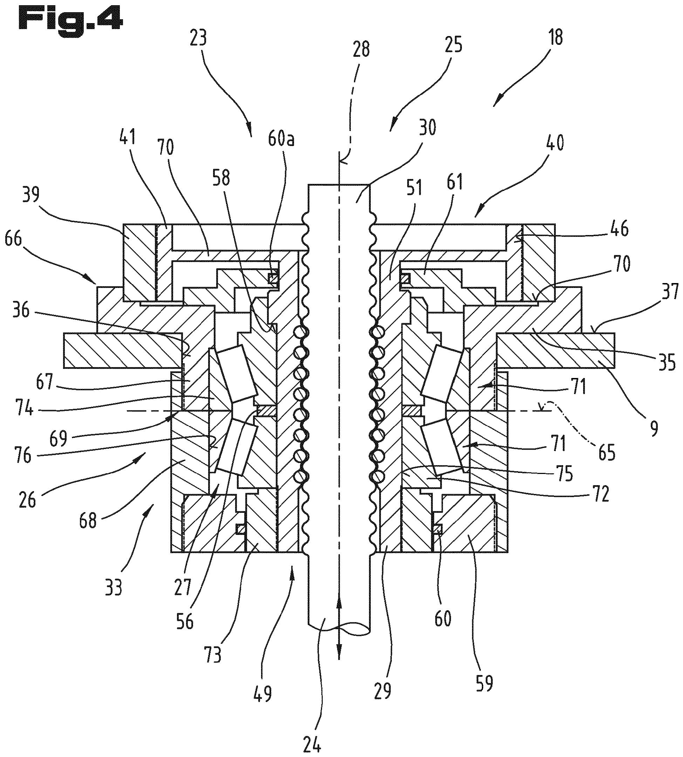

In der Fig. 4 ist eine andere Ausführung des Antriebsmittels 19 der Antriebsvorrichtung 18 mit einem, beispielsweise in einer zur Längsmittelachse 28 senkrechten Ebene 65 im Bereich des Rohrfortsatzes 33 geteiltem Gehäuse 26 gezeigt, wobei für Bauteile wie sie bereits in den vorhergehenden Fig. beschrieben sind die Bezugszahlen weiter angewendet werden.

Ein Gehäuseoberteil 66 ist mittels des Flansches 35 auf der Oberseite 37 des Querverbandes 9 befestigt und durchragt diesen mit einem Rohransatz 67 in der Bohrung 36. Am Rohransatz 67 ist ein rohrförmiger Gehäuseunterteil 68, bevorzugt mit einer Gewindeanordnung 69 befestigt.

Auf einer Oberseite 70 des Flansches 35 ist der Stator 39 des Drehantriebes 25, mit dem Innenumfang 46 koaxial zur Längsmittelachse 28 des Spindeltriebes 23 ausgerichtet, befestigt.

Der Rotor 40 des Drehantriebes 25 bildet nach dem gezeigten Ausführungsbeispiel eine einstückige Einheit mit der Spindelmutter 29 aus, die nach dieser Ausführung auch den Lagerungskörper 49 bildet und die sich ausgehend von einer den magnetbestückten Rotorkranz 41 aufweisenden Radscheibe 70, in den Rohrfortsatz 33 einragend erstreckt, und mit der Gewindespindel 30, z.B. Kugelumlauftrieb, in Antriebsverbindung ist.

Am Außenumfang 47 der Spindelmutter 29 ist ein Paar gegengleich zueinander angeordneter, die Lageranordnung 27 für die Spindelmutter 29 mit dem Rotor 40 in dem Rohrfortsatz 33 des Gehäuses 29 ausbildende Kegelrollenlager 71 vorgesehen die über Innenringe 72 zwischen dem Spannansatz 58 und einem Wellenring 73 auf der Spindelmutter 29 und über Außenringe 74 zwischen dem Spannansatz 58 im Rohrfortsatz 33 und dem Deckelring 61 befestigt. Die Dichtelemente 60, 60a, z.B. Wellendichtringe, in den Deckelringen 61 kapseln die Aufnahmekammer mit den Kegelrollenlagern 71 ab und ermöglichen eine dauerhafte, wartungsarme Schmierung der Lageranordnung 27.

Es wird noch auf eine weitere mögliche Ausbildung der Lageranordnung 27 verwiesen, die darin bestehen kann, dass beispielsweise eine Außenumfangsfläche 75 der Spindelmutter 29 und eine Innenumfangsfläche 76 des Rohrfortsatzes 33 als konisch zueinander gerichtete Laufflächen für Kegelrollen oder mit Laufrillen für Kugeln versehen sind und somit die Funktionen der Innenringe und der Außenringe der Lageranordnung 27 übernehmen, wodurch Bauteile eingespart werden und eine sehr kompakte Baueinheit für das Antriebsmittel 19 erreicht wird.

Erwähnt wird aber noch, dass die beschriebene Teilung des Gehäuses 26 in der Ebene 65 die Montage der Lageranordnung 27 vereinfacht und auch eine Justierung zur Erzielung einer weitestgehend spielfreien Lagerung vereinfacht, aber durchaus auch eine ungeteilte Gehäuseausbildung eine aus Rotor 40 und Spindelmutter 29 bestehende Einheit möglich ist. Dabei ist es auch möglich diese aus dem Rotor 40 und der Spindelmutter 29 bestehende Einheit einstückig auszubilden oder durch eine kraftschlüssige Verbindung eines Rotorbauteils mit einem Spindelmutterbauteil 40.

Der Ordnung halber sei abschließend darauf hingewiesen, dass zum besseren Verständnis des Aufbaus der Antriebsanordnung diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1, 2; 3; 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Biegepresse | 41 | Rotorkranz |
| 2 | Abkantpresse | 42 | Stabmagnet |
| 3 | Werkteil | 43 | Nabe |
| 4 | Biegewerkzeug | 44 | Durchgangsbohrung |
| 5 | Biegewerkzeug | 45 | Außendurchmesser |
| | | | |
| 6 | Bodenplatte | 46 | Innenumfang |
| 7 | Seitenwange | 47 | Außenumfang |
| 8 | Seitenwange | 48 | Bohrung |
| 9 | Querverband | 49 | Lagerungskörper |
| 10 | Frontstirnfläche | 50 | Aufnahmebohrung |
| | | | |
| 11 | Tischbalken | 51 | Zentrierfortsatz |
| 12 | Frontstirnfläche | 52 | Radiallager |
| 13 | Linearführung | 53 | Spannflansch |
| 14 | Druckbalken | 54 | Wellenmutter |
| 15 | Stirnfläche | 55 | Innenring |
| | | | |
| 16 | Stirnfläche | 56 | Distanzring |
| 17 | Werkzeugaufnahme | 57 | Außenring |
| 18 | Antriebsvorrichtung | 58 | Spannansatz |
| 19 | Antriebsmittel | 59 | Abschlussring |
| 20 | Energienetz | 60 | Dichtelement |
| | | 60a | weiteres Dichtelement |
| 21 | Steuereinrichtung | | |
| 22 | Eingabeterminal | 61 | Deckelring |
| 23 | Spindeltrieb | 62 | Deckscheibe |
| 24 | Stellmittel | 63 | |
| 25 | Drehantrieb | 64 | |
| | | 65 | Ebene |
| 26 | Gehäuse | | |
| 27 | Lageranordnung | 66 | Gehäuseoberteil |
| 28 | Längsmittelachse | 67 | Rohransatz |
| 29 | Spindelmutter | 68 | Gehäuseunterteil |
| 30 | Gewindespindel | 69 | Gewindeanordnung |
| | | 70 | Radscheibe |
| 31 | Doppelpfeil | | |
| 32 | Doppelpfeil | 71 | Kegelrollenlager |
| 33 | Rohrfortsatz | 72 | Innenring |
| 34 | Außenumfang | 73 | Wellenring |
| 35 | Flansch | 74 | Außenring |
| | | 75 | Außenumfangsfläche |
| 36 | Bohrung | | |
| 37 | Oberseite | 76 | Innenumfangsfläche |
| 38 | Außengehäuse | | |
| 39 | Stator | | |
| 40 | Rotor | | |

## Patentansprüche

1. Biegepresse (1) mit einer Antriebsvorrichtung (18) für die Betätigung eines an einem Maschinengestell, in Linearführungen (13) verstellbar gelagerten Druckbalkens (14) der Biegepresse (1),
mit einem Drehantrieb (25) für eine in einem Gehäuse (26) in einer Lageranordnung (27) drehbar gelagerte Spindelmutter (29) und mit einer mit dem Druckbalken (14) antriebsverbundenen Gewindespindel (30),
wobei der Drehantrieb (25) durch einen Elektro- Hohlwellenmotor mit einem Stator (29) und einem Rotor (40) gebildet ist,
und der Rotor (40) des Drehantriebs (25) durch einen scheibenförmigen, magnetbestückten Rotorkranz (41) und einen als Spindelmutter (29) ausgebildeten Lagerungskörper (49) ausgebildet ist,
**dadurch gekennzeichnet, dass** ein die Lageranordnung (27) aufweisender Lagerinnenraum des Gehäuses (26) durch einen in einem Rohrfortsatz (33) des Gehäuses (26) zwischen einem ringförmigen Spannansatz (58) und einem den Rohrfortsatz (33) begrenzenden Abschlussring (59) begrenzt ist, wobei dieser an seinem Innenumfang zur Abdichtung eines Lagerinnenraumes ein in einer Nut angeordnetes ringförmiges Dichtelement (60) aufweist, welches Dichtelement (60) mit einem Spannflansch (53) des Lagerungskörpers (49) zusammenwirkt, und dass der Lagerinnenraum des Gehäuses (26)
durch einen Deckelring (61) mit einem weiteren Dichtelement (60a) im Bereich eines zylindrischen Zentrierfortsatzes (51) des Lagerungskörpers (49) begrenzt ist, wobei der Deckelring (61) innerhalb des Rotorkranzes (41) des Rotors (40) angeordnet und auf einem Flansch (35) des Gehäuses befestigt ist, wodurch ein dichtender Abschluss des Lagerinnenraumes gegenüber dem Drehantrieb (25) realisiert ist,
wobei die Lageranordnung (27) ein Paar gegengleich angeordneter und den Lagerungskörper (49) im Rohrfortsatz (33) lagernder Radiallager (52) umfasst.

2. Biegepresse (1) nach Anspruch 1, **dadurch gekennzeichnet, dass** die Spindelmutter (29) in einer Bohrung (48) des Lagerungskörpers (49) angeordnet und mit diesem drehfest verbunden ist und der Lagerungskörper (49) in einer Lageranordnung (27) im Gehäuse um eine Längsmittelachse (28) drehbar gelagert und mit dem Rotor (40) des Drehantriebes (25) drehfest verbunden ist.

3. Biegepresse (1) nach Anspruch 1 oder 2, **dadurch gekennzeichnet, dass** das Gehäuse (26) durch einen die Lageranordnung (27) aufnehmenden Rohrfortsatz (33) mit einem an einem Endbereich einen Außenumfang (34) des Rohrfortsatzes (33) überragenden, ringförmigen Flansch (35) gebildet ist.

4. Biegepresse (1) nach Anspruch 3, **dadurch gekennzeichnet, dass** auf dem Flansch (35) der Stator (39) des Drehantriebes (25) über Zentriermittel mit einem Innenumfang (46) zur Längsmittelachse (28) koaxial zentriert befestigt ist.

5. Biegepresse (1) nach Anspruch 4, **dadurch gekennzeichnet, dass** der Zentrierfortsatz (51) von der Gewindespindel (30) in einer Durchgangsbohrung (44) hubabhängig durchragt wird.

6. Biegepresse (1) nach einem der vorhergehenden Ansprüche, **dadurch gekennzeichnet, dass** die Gewindespindel (30) den Rotor (40) in einer konzentrisch zur Durchgangsbohrung (44) angeordneten Bohrung des Rotors (40) und gegebenenfalls eine auf dem Stator (39) angeordneten Deckscheibe (62) durchragt.

7. Biegepresse (1) nach einem der vorhergehenden Ansprüche, **dadurch gekennzeichnet, dass** die Lageranordnung (27) für den Lagerungskörper (49) im Rohrfortsatz (33) durch eine gegengleiche Anordnung von Axialkräfte aufnehmenden Radiallagern (52), z.B. Kegelrollen-, Pendelrollen- oder Schrägkugellager, gebildet ist.

8. Biegepresse (1) nach einem der vorhergehenden Ansprüche, **dadurch gekennzeichnet, dass** die Lageranordnung (27) durch zumindest einen zwischen den Radiallagern (52) angeordnete Distanzring (56) spielfrei ausgebildet ist.

9. Biegepresse (1) nach einem der vorhergehenden Ansprüche, **dadurch gekennzeichnet, dass** die Dichtelemente (60) durch Radial- Wellendichtringe gebildet sind.

10. Biegepresse (1) nach einem der vorhergehenden Ansprüche, **dadurch gekennzeichnet, dass** die Spindelmutter (29) als Kugelumlauf- Spindelmutter ausgebildet ist.

11. Biegepresse (1) nach einem der vorhergehenden Ansprüche, **dadurch gekennzeichnet, dass** die Gewindespindel (30) linksgängig ausgebildet ist.

12. Biegepresse (1) nach einem der vorhergehenden Ansprüche, **dadurch gekennzeichnet, dass** die Gewindespindel (30) rechtsgängig ausgebildet ist.

13. Biegepresse (1) nach einem der vorhergehenden Ansprüche, **dadurch gekennzeichnet, dass** die Spindelmutter (29) über einen Presssitz in der Bohrung (48) des Lagerungskörper (49) zentriert und mit diesem über Befestigungsmittel, z.B. Schrauben, Mitnehmerkeil etc. drehfest verbunden.

14. Biegepresse (1) nach einem der vorhergehenden Ansprüche, **dadurch gekennzeichnet, dass** der Zentrierfortsatz (51) des Lagerungskörper (49) über einen Presssitz in einer Aufnahmebohrung (50) des Rotors (40) zentriert und mit diesem über Befestigungsmittel, z.B. Schrauben, Mitnehmerkeil etc. drehfest verbunden ist.

15. Biegepresse (1) nach Anspruch 1, **dadurch gekennzeichnet, dass** der Rotor (4) mit der Spindelmutter (29) über die Lageranordnung (27) im rohrförmigen Gehäusefortsatz (33) in radiale und axialer Richtung positioniert gehaltert ist.

16. Biegepresse (1) nach Anspruch 1 oder15, **dadurch gekennzeichnet, dass** an einer Außenumfangsfläche (75) der Spindelmutter (29) zumindest zwei Laufrillen für kugelförmige Lagerkörper ausgebildet sind.

17. Biegepresse (1) nach Anspruch 1 oder 15, **dadurch gekennzeichnet, dass** an der Außenumfangsfläche (75) der Spindelmutter (20) zumindest zwei einander zugewandte Konuslaufflächen für kegelförmige Lagerkörper ausgebildet sind.

18. Biegepresse (1) nach einem der vorhergehenden Ansprüche, **dadurch gekennzeichnet, dass** an einer Innenumfangsfläche (76) des Rohrfortsatzes (33) Laufflächen für kugelförmige Lagerkörper ausgebildet sind.

19. Biegepresse (1) nach einem der vorhergehenden Ansprüche, **dadurch gekennzeichnet, dass** an der Innenumfangsfläche (76) des Rohrfortsatzes(33) Konuslaufflächen für kegelförmige Lagerkörper ausgebildet sind.

20. Biegepresse (1) nach einem der vorhergehenden Ansprüche. **dadurch gekennzeichnet, dass** das Gehäuse (26) in einer zur Längsmittelachse (28) senkrecht erstreckenden Ebene (65) geteilt ausgebildet ist.

21. Biegepresse (1) nach Anspruch 1, **dadurch gekennzeichnet, dass** der Drehantrieb (25) durch einen vielpoligen Elektromotor, insbesondere einen Synchro- Servomotor, sogenannten Torque- Motor, gebildet ist.

## Claims

1. A bending press (1) having a drive device (18) for actuating a pressure beam (14) of the bending press (1) mounted on a machine frame so as to be adjustable in linear guides (13),
having a rotary drive (25) for a spindle nut (29) mounted in a housing (26) so as to be rotatable in a bearing arrangement (27) and having a threaded spindle (30) which is drive-connected to the pressure beam (14),
wherein the rotary drive (25) is formed by an hollow shaft electric motor having a stator (29) and a rotor (40),
and the rotor (40) of the rotary drive (25) is formed by a disc-shaped magnet-equipped rotor rim (41) and a bearing body (49) formed as a spindle nut (29),
**characterized in that** a bearing interior of the housing (26) comprising the bearing arrangement (27) is bounded by a cover ring (59) in a pipe extension (33) of the housing (26), which cover ring (59) is bounded between an annular clamping section (58) and the pipe extension (33), wherein it has an annular sealing element (60) arranged in a groove on its inner circumference for sealing a bearing interior, which sealing element (60) cooperates with a clamping flange (53) of the bearing body (49), and that the bearing interior of the housing (26) is bounded by a cover ring (61) with a further sealing element (60a) in the region of a cylindrical centering extension (51) of the bearing body (49), wherein the cover ring (61) is arranged inside the rotor rim (41) of the rotor (40) and is fastened on a flange (35) of the housing, whereby a sealing closure of the bearing interior with respect to the rotary drive (25) is realized,
wherein the bearing arrangement (27) comprises a pair of radial bearings (52) arranged in opposite directions and supporting the bearing body (49) in the pipe extension (33).

2. The bending press (1) according to claim 1, **characterized in that** the spindle nut (29) is arranged in a bore (48) of the bearing body (49) and is connected thereto so as to be prevented from rotating in relation to it, and the bearing body (49) is mounted in a bearing arrangement (27) in the housing so as to be rotatable about a longitudinal central axis (28) and is connected to the rotor (40) of the rotary drive (25) so as to be prevented from rotating in relation to it.

3. The bending press (1) according to claim 1 or 2, **characterized in that** the housing (26) is formed by a tubular extension (33) receiving the bearing arrangement (27) and having an annular flange (35) projecting at one end region beyond an outer circumference (34) of the pipe extension (33).

4. The bending press (1) according to claim 3, **characterized in that** the stator (39) of the rotary drive (25) is fastened on the flange (35) via centering means with an inner circumference (46) centered coaxially to the longitudinal center axis (28).

5. The bending press (1) according to claim 4, **characterized in that** the centering extension (51) is penetrated by the threaded spindle (30) in a through-bore (44) in a stroke-dependent manner.

6. The bending press (1) according to one of the preceding claims, **characterized in that** the threaded spindle (30) projects through the rotor (40) in a bore of the rotor (40) arranged concentrically to the through bore (44) and, optionally, through a cover disc (62) arranged on the stator (39).

7. The bending press (1) according to one of the preceding claims, **characterized in that** the bearing arrangement (27) for the bearing body (49) in the pipe extension (33) is formed by an opposing arrangement of radial bearings (52) absorbing axial forces, for example tapered roller bearings, self-aligning roller bearings or angular contact ball bearings.

8. The bending press (1) according to one of the preceding claims, **characterized in that** the bearing arrangement (27) is formed without clearance by at least one spacer ring (56) arranged between the radial bearings (52).

9. The bending press (1) according to one of the preceding claims, **characterized in that** the sealing elements (60) are formed by radial shaft sealing rings.

10. The bending press (1) according to one of the preceding claims, **characterized in that** the spindle nut (29) is designed as a circulating ball screw nut.

11. The bending press (1) according to one of the preceding claims, **characterized in that** the threaded spindle (30) is of left-handed design.

12. The bending press (1) according to one of the preceding claims, **characterized in that** the threaded spindle (30) is of right-handed design.

13. The bending press (1) according to one of the preceding claims, **characterized in that** the spindle nut (29) is centered in the bore (48) of the bearing body (49) via a force fit and is connected to it so as to be prevented from rotating in relation to it via fastening means, e.g. screws, driving wedge, etc.

14. The bending press (1) according to one of the preceding claims, **characterized in that** the centering extension (51) of the bearing body (49) is centered via a force fit in a receiving bore (50) of the rotor (40) and is connected to it so as to be prevented from rotating in relation to it via fastening means, e.g. screws, a driving wedge, etc.

15. The bending press (1) according to claim 1, **characterized in that** the rotor (4) is held with the spindle nut (29) positioned in radial and axial direction via the bearing arrangement (27) in the tubular housing extension (33).

16. The bending press (1) according to claim 1 or 15, **characterized in that** at least two running grooves for spherical bearing bodies are formed on an outer circumferential surface (75) of the spindle nut (29).

17. The bending press (1) according to claim 1 or 15, **characterized in that** at least two conical running surfaces facing each other for conical bearing bodies are formed on the outer circumferential surface (75) of the spindle nut (20).

18. The bending press (1) according to one of the preceding claims, **characterized in that** running surfaces for spherical bearing bodies are formed on an inner circumferential surface (76) of the pipe extension (33).

19. The bending press (1) according to one of the preceding claims, **characterized in that** conical running surfaces for conical bearing bodies are formed on the inner circumferential surface (76) of the pipe extension (33).

20. The bending press (1) according to one of the preceding claims, **characterized in that** the housing (26) is formed divided in a plane (65) extending perpendicular to the longitudinal center axis (28).

21. The bending press (1) according to claim 1, **characterized in that** the rotary drive (25) is formed by a multipole electric motor, in particular a synchronous servomotor, a so-called torque motor.

## Revendications

1. Presse plieuse (1) avec un dispositif d'entraînement (18) pour l'actionnement d'une barre de pression (14) de la presse plieuse (1), logée de manière mobile au niveau d'un châssis de machine, dans des guidages linéaires (13),
avec un entraînement rotatif (25) pour un écrou de broche (29) logé de manière rotative dans un boîtier (26) dans un dispositif de palier (27) et avec une broche filetée (30) reliée en entraînement avec la barre de pression (14),
dans laquelle l'entraînement rotatif (25) est constitué d'un moteur électrique à arbre creux avec un stator (29) et un rotor (40),
et le rotor (40) de l'entraînement rotatif (25) est constitué d'une couronne de rotor (41) en forme de disque, munie d'un aimant, et d'un corps de palier (49) conçu comme un écrou de broche (29),
**caractérisée en ce qu'**un espace interne de palier du boîtier (26), comprenant le dispositif de palier (27), est limité dans un prolongement tubulaire (33) du boîtier (26) entre un épaulement de serrage annulaire (58) et une bague de fermeture (59) limitant le prolongement tubulaire (33), dans laquelle celle-ci comprend, sur sa circonférence interne, pour l'étanchéification d'un espace interne de palier, un élément d'étanchéité (60) annulaire disposé dans une rainure, cet élément d'étanchéité (60) interagissant avec une bride de serrage (53) du corps de palier (49) et **en ce que** l'espace interne du boîtier (26) est limité par une bague de couvercle (61) avec un autre élément d'étanchéité (60a) au niveau d'un prolongement de centrage cylindrique (51) du corps de palier (49), dans laquelle la bague de couvercle (61) est disposée à l'intérieur de la couronne de rotor (41) du rotor (40) et est fixée sur une bride (35) du boîtier, ce qui permet de réaliser une fermeture étanche de l'espace interne par rapport à l'entraînement rotatif (25), dans laquelle le dispositif de palier (27) comprend une paire de paliers radiaux (52) disposés de manière opposée et logeant le corps de palier (49) dans le prolongement tubulaire (33).

2. Presse plieuse (1) selon la revendication 1, **caractérisée en ce que** l'écrou de broche (29) est disposé dans un alésage (48) du corps de palier (49) et est relié avec celui-ci de manière solidaire en rotation et le corps de palier (49) est logé de manière rotative dans une disposition de palier (27) dans le boîtier autour d'un axe central longitudinal (28) et est logé de manière solidaire en rotation avec le rotor (40) de l'entraînement rotatif (25).

3. Presse plieuse (1) selon la revendication 1 ou 2, **caractérisée en ce que** le boîtier (26) est constitué d'un prolongement tubulaire (33) logeant la disposition de palier (27), avec une bride annulaire (35) dépassant, au niveau d'une zone d'extrémité, une circonférence externe (34) du prolongement tubulaire (33).

4. Presse plieuse (1) selon la revendication 3, **caractérisée en ce que**, sur la bride (35), le stator (39) de l'entraînement rotatif (25) est fixé de manière centrée et coaxiale, par l'intermédiaire de moyens de centrage, avec une circonférence interne (46), à l'axe central longitudinal (28).

5. Presse plieuse (1) selon la revendication 4, **caractérisée en ce que** le prolongement de centrage (51) est traversé, en fonction de la course, par la broche filetée (30) dans un alésage de passage (44).

6. Presse plieuse (1) selon l'une des revendications précédentes, **caractérisée en ce que** la broche filetée (30) traverse le rotor (40) dans un alésage du rotor (40) disposé de manière concentrique par rapport à l'alésage de passage (44) et, le cas échéant, sur un disque de recouvrement (62) disposé sur le stator (39).

7. Presse plieuse (1) selon l'une des revendications précédentes, **caractérisée en ce que** la disposition de palier (27) pour le corps de palier (49) dans le prolongement tubulaire (33) est constitué par une disposition opposée de paliers radiaux (52) absorbant les forces axiales, par exemple des paliers à rouleaux coniques, à rouleaux oscillants ou à billes obliques.

8. Presse plieuse (1) selon l'une des revendications précédentes, **caractérisée en ce que** la disposition de palier (27) est réalisée sans jeu à l'aide d'au moins une bague d'écartement (56) disposée entre les paliers radiaux (52).

9. Presse plieuse (1) selon l'une des revendications précédentes, **caractérisée en ce que** les éléments d'étanchéité (60) sont constitués de bagues d'étanchéité d'arbres radiaux.

10. Presse plieuse (1) selon l'une des revendications précédentes, **caractérisée en ce que** l'écrou de broche (29) est conçu comme un écrou de broche à billes.

11. Presse plieuse (1) selon l'une des revendications précédentes, **caractérisée en ce que** la broche filetée (30) est réalisée avec un pas à gauche.

12. Presse plieuse (1) selon l'une des revendications précédentes, **caractérisée en ce que** la broche filetée (30) est réalisée avec un pas à droite.

13. Presse plieuse (1) selon l'une des revendications précédentes, **caractérisée en ce que** l'écrou de broche (29) est centré, par l'intermédiaire d'un ajustement serré, dans l'alésage (48) du corps de palier (49) et est relié de manière solidaire en rotation avec celui-ci par l'intermédiaire de moyens de fixation, par exemple des vis, une clavette d'entraînement, etc.

14. Presse plieuse (1) selon l'une des revendications précédentes, **caractérisée en ce que** le prolongement de centrage (51) du corps de logement (49) est centré, par l'intermédiaire d'un ajustement serré, dans un alésage de logement (50) du rotor (40) et est relié de manière solidaire en rotation avec celui-ci par l'intermédiaire de moyens de fixation, par exemple des vis, une clavette d'entraînement, etc.

15. Presse plieuse (1) selon la revendication 1, **caractérisée en ce que** le rotor (4) avec l'écrou de broche (29) est maintenu positionné dans la direction radiale et axiale, par l'intermédiaire de la disposition de palier (27), dans le prolongement de boîtier tubulaire (33).

16. Presse plieuse (1) selon la revendication 1 ou 15, **caractérisée en ce que**, sur une surface circonférentielle externe (75) de l'écrou de broche (29), sont réalisées au moins deux rainures de roulement pour des corps de paliers sphériques.

17. Presse plieuse (1) selon la revendication 1 ou 15, **caractérisée en ce que**, sur une surface circonférentielle externe (75) de l'écrou de broche (20), sont réalisées au moins deux surfaces de roulement coniques orientées l'une vers l'autre pour des corps de paliers coniques.

18. Presse plieuse (1) selon l'une des revendications précédentes, **caractérisée en ce que**, sur une surface circonférentielle interne (76) du prolongement tubulaire (33), sont réalisées des surfaces de roulement pour des corps de palier sphériques.

19. Presse plieuse (1) selon l'une des revendications précédentes, **caractérisée en ce que**, sur la surface circonférentielle interne (76) du prolongement tubulaire (33), sont réalisées des surfaces de roulement coniques pour des corps de paliers coniques.

20. Presse plieuse (1) selon l'une des revendications précédentes, **caractérisée en ce que** le boîtier (26) est réalisé de manière divisée dans un plan (65) perpendiculaire à l'axe central longitudinal (28).

21. Presse plieuse (1) selon la revendication 1, **caractérisée en ce que** l'entraînement rotatif (25) est constitué d'un moteur électrique multipolaire, plus particulièrement un moteur synchrone, un servomoteur, ce qu'on appelle un moteur Torque.
